# EUROPEAN PATENT APPLICATION

(11) **EP 4 661 036 A1**
(43) Date of publication of application: **10.12.2025**
(21) Application number: 25382542.6
(22) Date of filing: 28.05.2025
(51) Int. Cl.: H01F 27/32, H01F 27/40, H02B 13/065, H02B 13/055, H01F 27/20

(54) **SYSTEM FOR AUTOMATIC DISTRIBUTION AND REFILLING OF DIELECTRIC INSULATING FLUID IN MEDIUM AND HIGH VOLTAGE ELECTRICAL EQUIPMENT**

(30) Priority: 31.05.2024 ES 202431028 U
(71) Applicant: Ormazabal Corporate Technology, A.I.E., 48340 Amorebieta-Etxano (Bizkaia) (ES)
(72) Inventor: Izagirre Etxeberria, Josu, 48340 Amorebieta-Etxano (Bizkaia) (ES); Izcara Zurro, Jesus, 48340 Amorebieta-Etxano (Bizkaia) (ES)
(74) Representative: Herrero & Asociados, S.L.

(57) **Abstract**

The present invention describes a system (1) for automatically distributing and refilling a dielectric insulating fluid (2), such as a gas, for medium and high voltage electrical equipment (3) in installations (10) such as transformer substations or wind turbines when the pressure thereof is reduced with respect thereto over the service life thereof, This system comprises devices (4) for monitoring the pressure of the fluid in the hermetic compartments (9, 9', 9") of the electrical equipment (3), at least one distribution conduit (5), connectors (6, 7) and a control element (13), where the conduit (5) may be unique and common for all the equipment (3) of the installation (10).

## Description

### OBJECT OF THE INVENTION

The invention concerns a system for automatic distribution and refilling of a dielectric insulating fluid, such as a gas, for application in medium and high voltage electrical power distribution equipment, such as gas-insulated switchgear housed in electrical installations such as transformer and/or electrical distribution centres, electrical substations, wind turbines, etc.

The system makes it possible to automatically distribute and refill the hermetic compartments of electrical equipment with new fluid when the pressure in the compartments is reduced with respect to the filling pressure throughout the service life of the equipment. This reduces maintenance work, its associated costs, etc., and guarantees the correct operation of the electrical equipment during its useful life, as the pressure of the dielectric insulation fluid necessary for the correct operation of the operating means, such as the switch or switch/disconnector, and for the insulation between live electrical components of the electrical equipment, as well as between these components and their compartments, is controlled and maintained, always complying with the requirements of international regulations and those of the Grid Operators.

### BACKGROUND TO THE INVENTION

Dielectric insulating fluids in liquid or gaseous state are conventionally applied for the insulation of electrical components in a wide variety of electrical equipment, e.g. power distribution switchgear, gas insulated substations (GIS), gas insulated lines (GIL), transformers or others.

In medium and high voltage electrical power distribution equipment, e.g. electrical distribution switchgear, the electrical components (e.g. operating means, busbars, connections, etc.) are arranged in hermetically sealed compartments, e.g. switch compartment, disconnector compartment, busbar connection compartment between switchgear panels, etc., the interior of which defines an insulating space, wherein said space comprises a dielectric insulating fluid which electrically insulates the compartment from the live electrical components and also ensures insulation between the live electrical components. Furthermore, in order to interrupt the current in such electrical power distribution equipments, the dielectric insulating fluid can also function as an arc-extinguishing fluid.

Currently, one of the dielectric insulation fluids that has been widely used in medium and high voltage electrical power distribution equipment for many years is a fluorinated gas, namely sulphur hexafluoride (SF₆). This fluorinated gas is a greenhouse gas intensifier, having a global warming potential and a very high atmospheric lifetime. One of the tools that have been established to reduce this damage is the prohibition in the short term of the use of sulphur hexafluoride (SF₆) and other fluorinated gases in some electrical equipment for electricity distribution, i.e. replacing sulphur hexafluoride (SF₆) or other fluorinated gases used until now in electrical equipment for electricity distribution with another dielectric insulation fluid that does not contribute to the greenhouse effect or whose contribution is very low.

Alternative dielectric insulation fluids to sulphur hexafluoride (SF₆) or other fluorinated gases have a lower dielectric strength than the latter, and therefore, to obtain the same results as with sulphur hexafluoride (SF₆) or other fluorinated gases, other variables comprising the electrical equipment, such as the dimensions of the equipment or the filling pressure of certain compartments of the electrical equipment, must be taken into account. At atmospheric pressure, SF₆ has a dielectric strength 2.5 times better than air for example. SF₆ is usually used at 3 to 5 times atmospheric pressure, in which case the dielectric strength is up to 10 times that of air. Air has a modest dielectric strength, of the order of 32 kVpeak/cm at normal pressure (1 bar), about 160 kV/cm at 10 bar and about 500 kV/cm at 30 bar. Therefore, typically with alternative dielectric insulation gases to fluorinated gases such as SF₆, the filling pressure of the hermetic compartments of the electrical equipments is played with to achieve the desired dielectric strength, which involves increasing the gas filling pressure in the hermetic compartments of the electrical equipments relative to the filling pressure of the electrical equipment with fluorinated gases.

On the other hand, a ban on the use of fluorinated gases, such as sulphur hexafluoride (SF₆), in other electrical power distribution equipment, in particular in electrical equipment at voltage levels above 36 kV, is not yet foreseen in the near future. However, in order to reduce the dimensions of these other high voltage electrical power distribution equipment, fluorinated gases are used at high pressures, i.e. the gas filling pressure is increased in order to obtain smaller electrical equipment, which may lose this pressure over time due to manufacturing defects or poor choice of materials.

As mentioned above, the dimensions of electrical equipment also influence the dielectric strength, since the greater the separation between conductive parts, the greater the dielectric strength. This implies that the greater the separation between conductive parts and, therefore, the greater the dielectric strength, the larger the dimensions of the electrical equipment, which can lead to space problems in electrical installations such as transformer and/or electrical distribution centres, electrical substations, wind turbines, etc.

Therefore, in order to maintain the same dimensions of the electrical equipment as with the use of SF₆ or other fluorinated gases or to reduce them, it is normally played with to increase the pressure in the hermetic compartments of the electrical equipment, maintaining the same distances between conductive parts or reducing them as much as possible. This implies the need to measure certain quantities inside the hermetic compartments of the electrical equipment, e.g. pressure and temperature, as the increased pressure will increase the gas leakage rate. By measuring the pressure of the dielectric insulating gas in the gas-tight compartments, gas leaks can be detected, for example. For this reason, electrical equipment is equipped with pressure gauges, e.g. standard pressure gauges, where it is advisable to check that the gas pressure is correct before any live operation (with the switch or switch disconnector) and to avoid the risk of fire and explosion due to incorrect arcing (when opening the contacts of the switch or switch disconnector) inside the hermetic compartment. Due to insufficient gas pressure inside such hermetic compartments, an electric arc may occur between conductive parts, an internal defect, which will be the origin of an explosion, since the internal defect or electric arc generated causes a sudden and very high overpressure inside the hermetic compartment. This explosion can cause material damage, as well as serious personal injury to the operators who have operated the electrical equipment.

A leakage of dielectric insulating gas is detected in one or more electrical equipment of an electrical installation when the filling pressure of this gas in the electrical equipment has decreased. Consequently, in order to guarantee the correct operation of such electrical equipment, i.e. to guarantee the electrical insulation between the live electrical components (busbars, operating means, electrical connections, etc.) and between the latter and their compartment, as well as to guarantee the correct operation of the operating means (e.g. switch or switch/disconnector) which cuts off the electrical current and therefore for correct arc extinction, it is necessary that the filling pressure of the dielectric insulating gas in the equipment is correct. Therefore, when a drop in the filling pressure of the gas is detected, the electrical equipment is refilled with new dielectric insulating gas, thus increasing the filling pressure again and maintaining the electrical equipment in optimum operating conditions.

Usually, the refilling of electrical equipment is carried out manually, i.e. the installations are checked by an operator who checks the pressure of the dielectric insulation gas in the electrical equipment through the manometer, one by one, individually and, in the event of a decrease in pressure with respect to the initial filling pressure, the electrical equipment is refilled with gas, also individually, refilling one by one the electrical equipment where the pressure has decreased. The refilling gas, stored in specially prepared cylinders, is taken by the operators themselves to the electrical installation where the electrical equipment for the distribution of electrical energy is located. Normally, the hermetic compartments of current electrical equipment that are filled with SF₆ gas are sealed for life at the factory, so they do not have any specific point through which to refill the gas. In this sense, in the event of needing to refill the gas in any electrical equipment, the refilling is carried out through the point where the pressure gauge is connected to the hermetic compartment.

This way of checking the filling pressure and dielectric insulation gas filling of electrical equipment has certain disadvantages. For example, the gas filling pressure check has to be carried out on site, checking each of the electrical equipment one by one, and the operator has to go to the same electrical installation where the electrical equipment is located to view the pressure gauge of each equipment, which entails extra time and expense.

Likewise, given that no pressure measurement is available until the pressure gauges are displayed in the same installation where the electrical equipment is located, this means that the operator always has to carry new dielectric insulation gas with him in case he finds any electrical equipment with the filling pressure below the established level, so that he can refill it. On the other hand, as the pressure check and therefore the existence of leaks is carried out between periodic inspections of electrical installations, in the event of a leak between these inspections, as there is no continuous monitoring of the pressure and given the tendency to telematically control the manoeuvres of the electrical equipment, this could lead to an internal arc due to a lack of pressure.

As for the refilling of dielectric insulation gas, there is the disadvantage that, like the pressure check, it must be carried out equipment by equipment, i.e. electrical equipment comprising a pressure below the established pressure is refilled with gas one by one, which means a longer time to perform the task. Moreover, as already mentioned, since the hermetic compartments of electrical equipment are sealed for life, they do not have any specific point for gas refilling, so it is necessary to disassemble the pressure gauge in order to refill it through its connection point with the hermetic compartment. Once the gas refilling has been carried out, the pressure gauge is reassembled and the filling pressure is checked.

In order to solve the inconvenience of having to go to the same installation to check the filling pressure of the dielectric insulation gas of each electrical equipment, there are solutions of devices for continuous monitoring of the filling pressure of the gas contained in the hermetic compartments and which are installed in each of the electrical equipment. This continuous monitoring of each electrical equipment can be carried out remotely, so it is not necessary for an operator to travel to the installation to check the gas pressure of the equipment.

It is clear that, in the electric power sector, it is advisable to monitor gas pressure throughout the service life of electrical equipment, regardless of the dielectric insulation fluid used. In turn, it is also evident that, in the electric power sector, it is necessary to maintain electrical equipment with optimum gas pressure values for its correct operation, for which it is necessary to refill gas in electrical equipment where the pressure value is below the established value and even more so in equipment that is filled with gases with higher pressures. In this sense, given that the gas pressure check and, if necessary, the gas refilling is only carried out manually and in situ when an operator goes to the electrical installation, it may happen that in the meantime some electrical equipment is without sufficient filling pressure and due to a manoeuvre of the switch or switch/disconnector under voltage, a fire or even an explosion may occur, causing material and personal damage.

Therefore, it is concluded that medium and high voltage electrical power distribution equipment, especially electrical equipment that is filled with high gas pressures, needs to maintain the gas pressure throughout its lifetime within the established limits, always complying with the requirements of international regulations and Grid Operators.

### DESCRIPTION OF THE INVENTION

The present invention relates to a system for the automatic distribution and refilling of a dielectric insulating fluid, such as a gas, for application in medium and high voltage electrical power distribution equipment, such as gas-insulated switchgear housed in electrical installations such as electrical transformer and/or distribution centres, electrical substations, wind turbines, etc., and which is intended to solve each and every one of the problems mentioned above.

The system of the present invention makes it possible to distribute and fill with a dielectric insulating fluid, for example a gas, at least one hermetic compartment, such as a switch compartment, disconnector compartment, busbar connection compartment between switchgear panels, etc., of at least one electrical power distribution equipment automatically when the pressure in the hermetic compartments is reduced with respect to the filling pressure during the service life of the compartments.

For this purpose, the system comprises at least one fluid filling pressure monitoring device connected to the hermetic compartment of the medium and high voltage electrical power distribution equipment. The device can continuously and remotely monitor the gas pressure in the hermetic compartment. Furthermore, the system comprises at least one dielectric insulation fluid distribution line and at least one connector, e.g. T-type or elbow connector, which allows the connection of the line to one or more hermetic compartments of the electrical equipment depending on the number and nature of the electrical equipment in the electrical installation. The dielectric insulation fluid distribution conduit may or may not be unique and common to all medium and high voltage electrical power distribution equipment comprising the electrical installation and is connected or are connected to each of the electrical equipment through the aforementioned connectors. The fluid distribution conduit can be flexible, so that any misalignment that may exist between the different electrical equipment can be compensated for or can be installed with a bending radius in cases where the assembly of the electrical installation so requires. In order to allow the passage of fluid from the conduit to at least one electrical equipment, in particular to its hermetic compartment or to its hermetic compartments in the case of having more than one in the same electrical equipment, the distribution and filling system also includes at least one element for controlling the passage of the fluid, such as a solenoid valve, which may be of two positions (open - closed) designed to control the passage of the dielectric insulating fluid between the fluid distribution line and the medium and high voltage electrical power distribution equipment. The fluid flow control element may be installed between the T-type connector or elbow type connector and the hermetic compartment of the medium and high voltage electrical power distribution equipment.

It is also envisaged that the connector can be of the straight type, thus allowing for the extension of the dielectric insulation fluid distribution line in the event of an extension of the electrical installation with the addition of new medium and high voltage electrical power distribution equipment.

In the case where the dielectric insulation fluid is an industrial fluid, for example an industrial gas, the automatic distribution and refilling system of the present invention may comprise at least one fluid starting point, such as a container or reservoir that stores the new refilling fluid under pressure, from where the fluid distribution conduit to the medium and high voltage electrical power distribution equipment for the subsequent refilling of the hermetic compartments of said electrical equipment starts. The container or reservoir may be housed inside the electrical installation together with the electrical power distribution equipment or it may be located outside the electrical installation.

In the case where the dielectric insulating fluid is atmospheric air from outside the installation, the automatic distribution and refilling system of the present invention may comprise at least one fluid starting point, such as a compressor associated with a dehumidifier and a solid particle filter, for refilling the hermetic compartment or hermetic compartments of the medium and high voltage electrical power distribution equipment with dehumidified and largely particle-free outside air. The compressor may be located outside or inside the electrical installation.

By means of the automatic distribution and refilling system of the invention, in the event that any device for monitoring the filling pressure of the fluid contained in at least one hermetic compartment of one or more electrical equipment detects a drop in pressure below the minimum pressure level established for each compartment, the fluid flow control element corresponding to the electrical power distribution equipment(s) that have suffered a drop in pressure is automatically opened, automatically refilling the affected hermetic compartment of such electrical equipment until the initial filling pressure is reached in which the electrical isolation between the live electrical components and between the latter and their compartment is guaranteed, as well as the correct operation of the operating means when extinguishing the electric arc generated between their contacts when the current is cut off, thus avoiding malfunctions causing material and personal damages.

Likewise, by means of the distribution and refilling system of the dielectric insulation fluid of the present invention, given that it is automatic, it avoids the need for an operator to go to the installations to check the filling pressures of the different electrical equipment, it avoids the manual and individual refilling (one by one) of those equipment in which a drop in pressure has been detected and it also avoids the operators themselves carrying bottles of the insulation gas to the installation where the electrical equipment for the distribution of electrical energy is located. Furthermore, by using at least one fluid distribution line and the use of connectors and fluid flow control elements, it is possible to refill several electrical equipment at the same time, without having to dismantle the pressure gauge of each equipment to be refilled in order to carry out the refilling through its connection point with the hermetic compartment, etc., thus considerably reducing the cost and time required to carry out the gas refilling task and, in addition, electrical power distribution equipment is kept in optimum conditions for its correct operation at all times.

### DESCRIPTION OF THE FIGURES

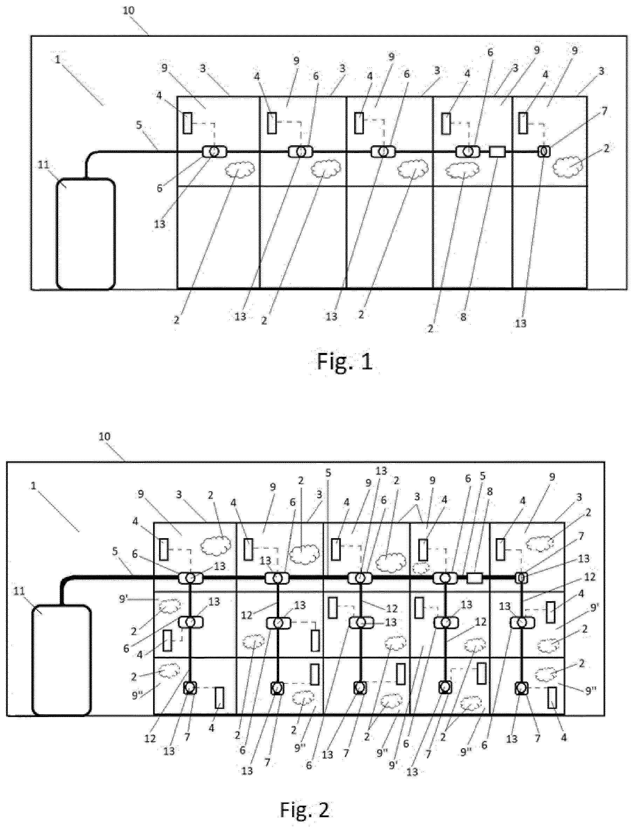

Figure 1.- Shows, in a schematic view, the system for the automatic distribution and refilling of a dielectric insulation fluid of an installation according to a first embodiment of the invention, where the conduit (5) for distribution of the fluid (2) is unique and common to all the electrical equipment (3) for distribution of medium and high voltage electrical energy comprising the electrical installation (10).
Figure 2.- Shows, in a schematic view, the system for the automatic distribution and refilling of a dielectric insulation fluid of an installation according to a second embodiment of the invention where the conduit (5) for distribution of the fluid (2) is unique and common to all the electrical equipment (3) and where the conduit (5) comprises an extension (12) for each electrical equipment (3) that allows the connection between the conduit (5) and each hermetic compartment (9, 9', 9") of each electrical equipment (3).

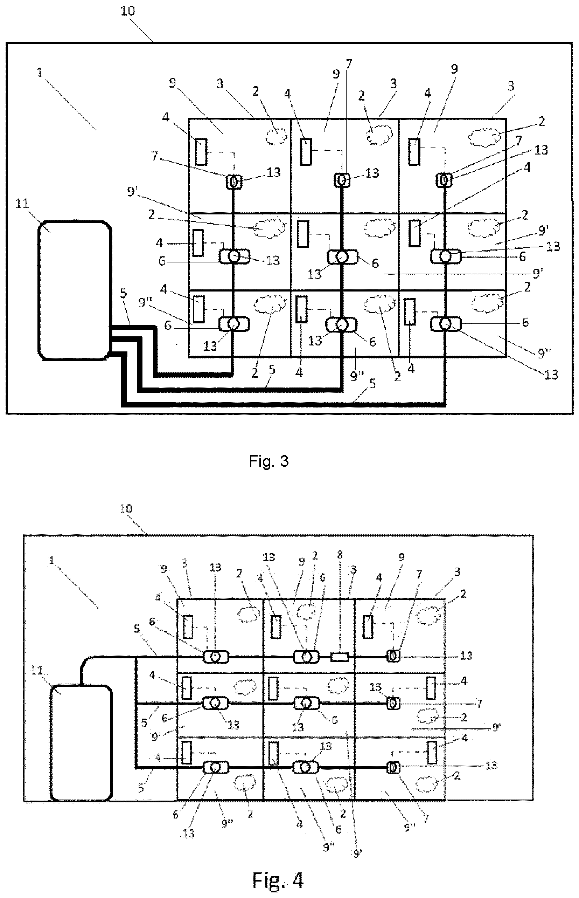

Figure 3.- It shows, in a schematic view, the system for the automatic distribution and refilling of a dielectric insulation fluid of an installation according to a third embodiment of the invention where the system (1) comprises a conduit (5) for distribution of the fluid (2) for each electrical equipment (3) and where the conduit (5) comprises an extension (12) for each electrical equipment (3) that allows the connection between the conduit (5) and each hermetic compartment (9, 9', 9") of each electrical equipment (3).
Figure 4.- Shows, in a schematic view, the system for the automatic distribution and refilling of a dielectric insulation fluid of an installation according to a fourth embodiment of the invention, where the system comprises a conduit (5) for distributing the fluid (2) through each hermetic compartment (9, 9', 9") of one or more electrical equipment (3).

### PREFERRED EMBODIMENT OF THE INVENTION

Several examples of preferred embodiments are described below with reference to the above figures, without limiting or reducing the scope of protection of the present invention.

Figures 1 to 4 show various possible embodiments of a system (1) for automatically dispensing and refilling a dielectric insulating fluid (2), wherein the dielectric insulating fluid may be a gas, such as sulphur hexafluoride (SF₆), or a mixture of gases, such as gases or gas mixtures of natural origin (CO₂, O₂, N₂), or gas mixtures with very low greenhouse fluorinated synthetic gases such as mixtures of fluoroketones with carrier gases such as CO₂, N₂, O₂, air or mixtures thereof, or gas mixtures such as non-flammable hydrofluoroolefins with carrier gases such as N₂, O₂, dry air, helium, CO₂ or mixtures thereof, etc.) or such as dry air, synthetic air or compressed air.

The system (1) for automatically distributing and refilling the dielectric insulation fluid (2) is applicable to at least one electrical equipment (3) for medium and high voltage electrical energy distribution, equipped with at least one hermetic gas-insulated compartment (9, 9', 9"), such as gas-insulated switchgear, where such electrical equipment may be installed in an electrical installation (10) such as an electrical transformer and/or distribution centre, electrical substation, wind turbine, etc. The system (1) makes it possible to distribute the fluid (2) and to refill with said fluid (2) at least one hermetic compartment (9, 9', 9") of at least one electrical equipment (3) automatically when the pressure of the hermetic compartments (9, 9', 9") is reduced with respect to the filling pressure during the service life of said compartments (9, 9', 9").

The system (1) for automatically distributing and refilling the fluid (2) comprises at least one device (4) for monitoring the pressure of the fluid (2) contained in the hermetic compartments (9, 9', 9"). As shown in Figures 1 to 4, each of the electrical equipment (3) or each of the hermetic compartments (9, 9', 9") of the electrical equipment (3) provided in the electrical installation (10) may comprise a fluid (2) pressure monitoring device (4), which continuously and remotely monitors the gas pressure in each compartment (9, 9', 9") throughout the lifetime of the electrical equipment (3).

Also, the system (1) for automatically distributing and refilling the fluid (2) comprises at least one conduit (5) for distributing the fluid (2), which may be single and common to all the electrical equipment (3) that may be present in the electrical installation (10), as shown in Figures 1 and 2, or there may be more than one conduit (5) distributing the fluid (2) to more than one electrical equipment (3) or compartment (9, 9', 9") hermetically sealed, as shown in Figures 3 and 4.

The system (1) also comprises at least one connector (6, 7) of the conduit (5) allowing connection of the conduit (5) to each of the electrical equipment (3), in particular to each of the hermetic compartments (9, 9', 9"), and at least one control element (13) for the passage of the fluid (2), such as a solenoid valve with two positions (open - closed), arranged between each connector (6, 7) and each hermetic compartment (9, 9', 9") of one or more electrical equipment (3).

The fluid (2) distribution conduit (5) may be flexible and extendable to one or more hermetic compartments (9, 9', 9") of new electrical equipment (3) to be incorporated into the electrical installation (10), so that any misalignment that may exist between the different electrical equipment (3) can be compensated for or installed with a bending radius in cases where the assembly of the electrical installation (10) so requires.

The connector (6, 7) can be a T-type connector (6) or an elbow-type connector (7), depending on the position of the electrical equipment (3) or the hermetic compartment (9, 9', 9") in the electrical installation (10). That is to say, if there are several electrical equipment (3) in the installation (10), in the case of the first equipment (3) or hermetic compartment (9, 9', 9") that is connected to the conduit (5) or in the case of an intermediate one, a T-type connector (6) is used. On the other hand, if there is only one equipment (3) in the installation (10) or if among a plurality of equipment (3) or the hermetic compartment (9, 9', 9") is the last one to be connected to the conduit (5), an elbow-type connector (7) is used, as can be seen in figures 1 to 4.

In the case of an extension of the electrical installation (10), where new electrical equipment (3) is to be added, the system includes an additional connector (8) which can be of the straight type to allow for the extension of the fluid (2) distribution conduit (5), i.e. in the case where it is necessary to extend the conduit (5), a new piece of conduit is connected through the straight type connector (8).

As can be seen in Figures 1 to 4, the system (1) for automatic distribution and refilling of the fluid (2) comprises at least one point (11) for starting the fluid (2), which may be either a container for storing the fluid (2) at high pressure located outside or inside the electrical installation (10) or a compressor located outside or inside the electrical installation (10) and associated with a dehumidifier and a solid particle filter for refilling the at least one compartment (9, 9', 9") of one or more medium and high voltage electrical equipment (3) for power distribution with outside air after dehumidification and filtering. The starting point (11) of the fluid (2) is connected to each of the hermetic compartments (9, 9', 9") by means of one or more conduits (5) and connectors (6, 7), so that if any device (4) for monitoring the filling pressure of one or more electrical equipment (3) detects a drop in pressure below a set value, automatically opens the control element (13) of the fluid flow corresponding to each hermetic compartment (9, 9', 9") that has suffered said pressure drop, automatically filling the hermetic compartments (9, 9', 9") of said electrical equipment (3) until reaching the optimum filling pressure and then closing again the control element (13) of the fluid flow.

Figure 1 represents a first embodiment of the invention in which the fluid (2) distribution conduit (5) is unique and common to all electrical equipment (3) for medium and high voltage power distribution comprising the electrical installation (10).

In a second embodiment of the invention, as shown in figure 2, the fluid (2) distribution conduit (5) is single and common to all electrical equipment (3), but the conduit (5) comprises an extension (12) for each electrical equipment (3) which allows the connection between the conduit (5) and one or more hermetic compartments (9, 9', 9") of each electrical equipment (3).

Figure 3 shows a third embodiment of the invention in which the system (1) comprises a conduit (5) for distributing the fluid (2) through each electrical equipment (3), each conduit (5) being connected to each hermetic compartment (9, 9', 9") of each electrical equipment (3).

Finally, Figure 4 shows a fourth embodiment of the invention where the system (1) comprises a fluid (2) distribution conduit (5) for each type of hermetic compartment (9, 9', 9") of one or more electrical equipment (3), i.e. if each electrical equipment (3) of the installation (10) comprises for example a switch compartment (9), a disconnector compartment (9') and a busbar compartment (9") for connecting between cubicles, the electrical installation (10) shall comprise a first conduit (5) common to all the switch compartments (9), a second conduit (5) common to all the disconnector compartments (9') and a third conduit (5) common to all the busbar compartments (9") for connecting between cubicles.

## Claims

1. System (1) for the automatic distribution and refilling of a dielectric insulation fluid (2), for application in at least one electrical equipment (3) for the distribution of medium and high voltage electrical energy of an electrical installation (10),
**characterised by** the fact that it comprises:
- at least one device (4) for monitoring the pressure of the fluid (2) contained in at least one hermetic compartment (9, 9', 9") of the medium and high voltage electrical equipment (3) for power distribution,
- at least one fluid (2) distribution conduit (5),
- at least one connector (6, 7) of the conduit (5), and
- at least one fluid (2) flow control element (13) for automatic distribution and refilling of the hermetically sealed compartments (9, 9', 9") when the pressure in the compartments (9, 9', 9") is reduced with respect to the filling pressure.

2. Automatic distribution and refilling system (1) according to claim 1, **characterised in that** the fluid (2) distribution conduit (5) is unique and common to all the electrical equipment (3) for the distribution of medium and high voltage electrical energy comprising the electrical installation (10).

3. Automatic distribution and refilling system (1) according to claim 2, **characterised in that** the conduit (5) comprises an extension (12) for each electrical equipment (3) that allows the connection between the conduit (5) and each hermetic compartment (9, 9', 9") of each electrical equipment (3).

4. Automatic distribution and refilling system (1) according to claim 1, **characterised by** comprising a fluid (2) distribution conduit (5) for each electrical equipment (3).

5. Automatic distribution and refilling system (1) according to claim 1, **characterised in that** it comprises a conduit (5) for distribution of the fluid (2) through each hermetic compartment (9, 9', 9"') of one or more electrical equipment (3).

6. Automatic distribution and refilling system (1) according to any of the previous claims, **characterised in that** the fluid (2) distribution conduit (5) is flexible and expandable to one or more hermetic compartments (9, 9', 9") for new electrical equipment (3) incorporated in the electrical installation (10).

7. Automatic distribution and refilling system (1) according to claim 6, **characterised in that** the conduit (5) is connected to the compartments (9, 9', 9") of the electrical equipment (3) by means of T-type connectors (6) or elbow-type connectors (7).

8. Automatic distribution and refilling system (1) according to any of the previous claims, **characterised in that** the control element (13) is installed between the connector (6, 7) and the hermetic compartment (9, 9', 9") of the electrical equipment (3) for the distribution of medium and high voltage electrical energy.

9. Automatic distribution and refilling system (1) according to claim 8, **characterised in that** the control element (13) for the passage of the fluid (2) comprises a solenoid valve with two positions, open or closed, designed to control the passage of the fluid (2) between the conduit (5) and the electrical equipment (3) for the distribution of medium and high voltage electrical energy.

10. Automatic distribution and refilling system (1) according to claim 1, **characterised in that** it comprises an additional connector (8) of the straight type that allows the conduit (5) to be lengthened.

11. Automatic distribution and refilling system (1) according to any of the previous claims, **characterised by** comprising at least one point (11) where the fluid (2) is dispensed.

12. Automatic distribution and refilling system (1) according to claim 11, **characterised by** the fact that the point (11) where the fluid (2) starts is a container located outside or inside the electrical installation (10).

13. Automatic distribution and refilling system (1) according to claim 11, **characterised in that** the starting point (11) of the fluid (2) is a compressor located outside or inside the electrical installation (10) and associated with a dehumidifier and a solid particle filter for refilling at least one hermetic compartment (9, 9', 9") of the electrical equipment (3) for medium and high voltage electrical energy distribution with air from outside.
